# DEMANDE DE BREVET EUROPEEN

(11) **EP 1 749 695 A2**
(43) Date de publication de la demande: **07.02.2007**
(21) Numéro de dépôt: 06300833.8
(22) Date de dépôt: 27.07.2006
(51) Int. Cl.: B60N 2/30

(54) **Agencement d'habitacle de véhicule comportant des sièges mobiles**

(30) Priorité: 05.08.2005 FR 0552443
(71) Demandeur: Renault s.a.s., 92100 Boulogne Billancourt (FR)
(72) Inventeur: Lossie, Franck, 91300 Massy (FR); Larsonneur, Jean-Francois, 78100 Saint Germain en Laye (FR)

(57) **Abrégé**

L'invention propose un Agencement pour habitacle de véhicule automobile qui comporte :
- au moins un siège (10) comportant une assise (14) horizontale et un dossier (20) qui est monté pivotant par rapport à l'assise (14) ;
- des moyens de montage, du siège (10) sur un plancher (16) du véhicule ; et
- des moyens de réglage (22) de la position longitudinale de l'assise (14) dans l'habitacle,

du type dans lequel l'assise (14) est montée basculante par rapport au plancher (16) autour d'un axe transversal (B) entre une position horizontale d'utilisation, et une position verticale de rangement,
caractérisé en ce que le siège (10) est monté sur le plancher (16) du véhicule par l'intermédiaire d'un podium (18) qui porte les moyens de réglage (22) et qui est solidaire de l'assise (14) en basculement entre la position d'utilisation et la position de rangement.

## Description

L'invention propose un agencement pour un habitacle de véhicule automobile qui comporte au moins une rangée de sièges mobiles.

L'invention propose plus particulièrement un agencement pour habitacle de véhicule automobile qui comporte :
- au moins un siège d'orientation générale longitudinale comportant une assise horizontale et un dossier qui est monté pivotant par rapport à l'extrémité arrière de l'assise ;
- des moyens de montage, du siège sur un plancher du véhicule de manière que l'assise soit située au dessus et à distance du plancher ; et
- des moyens de réglage de la position longitudinale de l'assise dans l'habitacle,
du type dans lequel l'assise est montée basculante par rapport au plancher autour d'un axe transversal entre une position d'utilisation dans laquelle l'assise est sensiblement parallèle au plancher du véhicule, et une position de rangement dans laquelle l'assise est en position sensiblement verticale.

Le document US-A-2003/0071492 décrit un tel agencement d'un habitacle de véhicule automobile qui comporte trois rangées de sièges et pour lequel chaque siège de la rangée centrale est monté basculant par rapport au plancher de l'habitacle, notamment pour permettre l'accès des passagers aux sièges de la rangée arrière.

Chaque siège de la rangée centrale est en outre monté coulissant longitudinalement par rapport au plancher, pour permettre de régler l'espace longitudinal entre le siège de la deuxième rangée, et le siège de la première rangée est situé en vis-à-vis.

Selon ce document, les moyens de réglage de la position longitudinale de l'assise sont agencés au niveau du plancher de l'habitacle, et ils sont recouverts par des moyens d'habillage limitant les risques qu'un passager ne se blesse au contact de ces moyens de réglage.

Ainsi, la partie inférieure du siège est relativement volumineuse, et l'espace disponible pour les pieds d'un passager assis sur un siège de la rangée arrière, est réduit de manière importante, ce qui pénalise le confort de ce passager.

L'invention a pour but de proposer un agencement d'un habitacle de véhicule automobile pour lequel le volume global de la partie inférieure du siège est relativement réduit, permettant au passager qui est assis à l'arrière dudit siège, de disposer ses pieds sous le siège sans être gêné de manière trop importante.

Dans ce but, l'invention propose un agencement du type décrit précédemment, caractérisé en ce que le siège est monté sur le plancher du véhicule par l'intermédiaire d'un podium qui porte les moyens de réglage de la position longitudinale de l'assise et qui est solidaire de l'assise en basculement par rapport au plancher autour de l'axe transversal entre la position d'utilisation et la position de rangement.

Selon d'autres caractéristiques de l'invention :
- le podium comporte un châssis supérieur horizontal sur lequel sont montés les moyens de réglage, et au moins un pied arrière qui s'étend globalement vers le bas depuis une extrémité arrière du châssis supérieur et qui est monté articulé par rapport à l'extrémité arrière du châssis supérieur de manière que le pied s'étende vers le bas lorsque l'assise est en position d'utilisation, et de manière que le pied s'étende globalement verticalement vers le haut dans le prolongement du châssis supérieur lorsque l'assise est en position de rangement ;
- l'agencement qui comporte une rangée transversale de deux sièges dont chacun est monté sur le plancher par l'intermédiaire d'un podium associé, et chaque podium comporte un seul pied qui est agencé sur le châssis supérieur associé au voisinage de l'extrémité transversale externe de la rangée de sièges, de manière à constituer une paire de pieds pour la rangée de sièges ;
- l'agencement comporte un élément de support agencé transversalement entre les deux sièges qui comporte une portion supérieure sur laquelle le châssis supérieur de chaque podium est apte à venir en butée vers le bas lorsque l'assise du siège associé est en position d'utilisation.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'une partie de l'habitacle d'un véhicule comportant une rangée deux sièges dont chacun est monté sur le plancher par l'intermédiaire d'un podium selon l'invention ;
- la figure 2 est une vue latérale d'un siège représenté à la figure 1 dans lequel l'assise est en position basse d'utilisation ;
- la figure 3 est une vue similaire à celle de la figure 2, dans laquelle l'assise est en position relevée de rangement ;
- la figure 4 est une vue similaire à celle de la figure 1, montrant une variante de l'invention qui comporte un élément intermédiaire de support des deux podiums.

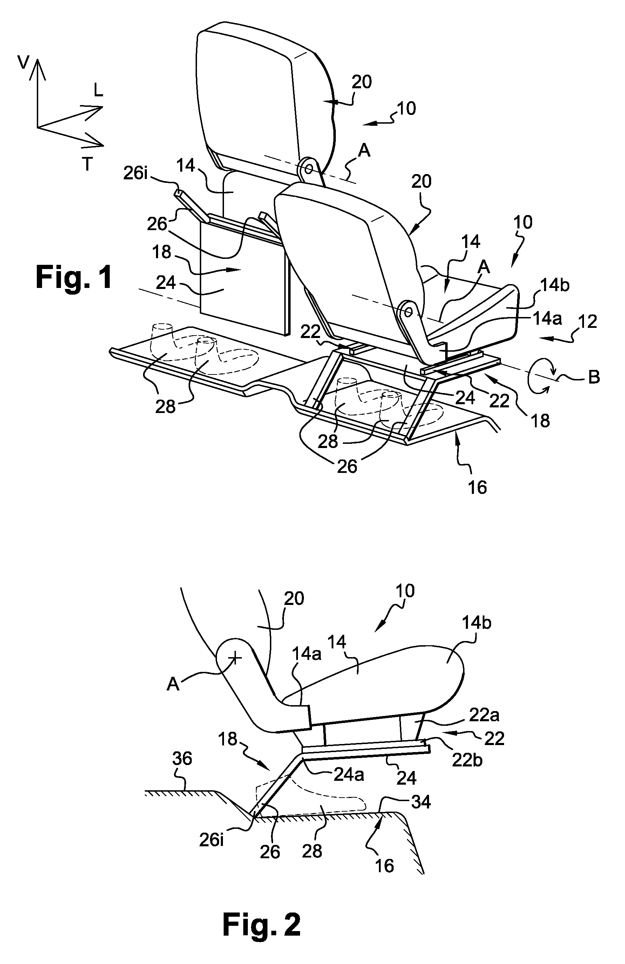

Pour la description de l'invention, on adoptera à titre non limitatif les orientations verticale, longitudinale et transversale selon le repère V, L, T indiqué à la figure 1.

On adoptera aussi l'orientation d'avant en arrière comme étant la direction longitudinale et de droite à gauche en se reportant à la figure 1.

Dans la description qui va suivre, des éléments identiques, similaires ou analogues seront désignés par les mêmes chiffres de référence.

On a représenté à la figure 1 une partie de l'intérieur d'un habitacle de véhicule automobile, dans lequel deux sièges 10 réglables sont agencés en formant une rangée transversale 12 dans l'habitacle.

Les sièges 10 de cette rangée 12 sont situés en arrière des sièges d'une rangée transversale avant (non représentée), comprenant notamment le siège du conducteur du véhicule, et ils sont situés en avant de sièges d'une rangée arrière transversale de sièges (non représentée). Les sièges 12 forment par conséquent une rangée transversale centrale 12 dans l'habitacle.

Chaque siège 10 comporte une assise 14 horizontale qui est montée sur le plancher 16 du véhicule au dessus et à distance du plancher 16, un dossier 20 qui est monté articulé par rapport à l'extrémité longitudinale arrière 14a de l'assise 14 autour d'un axe A transversal, et des moyens 22 de réglage de la position longitudinale de l'assise 14 par rapport au plancher 16.

Ainsi, le passager qui s'assoie sur un tel siège peut régler la position de l'assise 14 et du dossier 20 par rapport au plancher 16 du véhicule, et par conséquent par rapport aux autres sièges en fonction notamment de sa morphologie, ce qui lui garantit un certain confort.

L'accès des passagers aux sièges de la rangée arrière s'effectue par les portes latérales arrière du véhicule (non représentées) qui permettent aussi l'accès aux sièges de la rangée centrale 12.

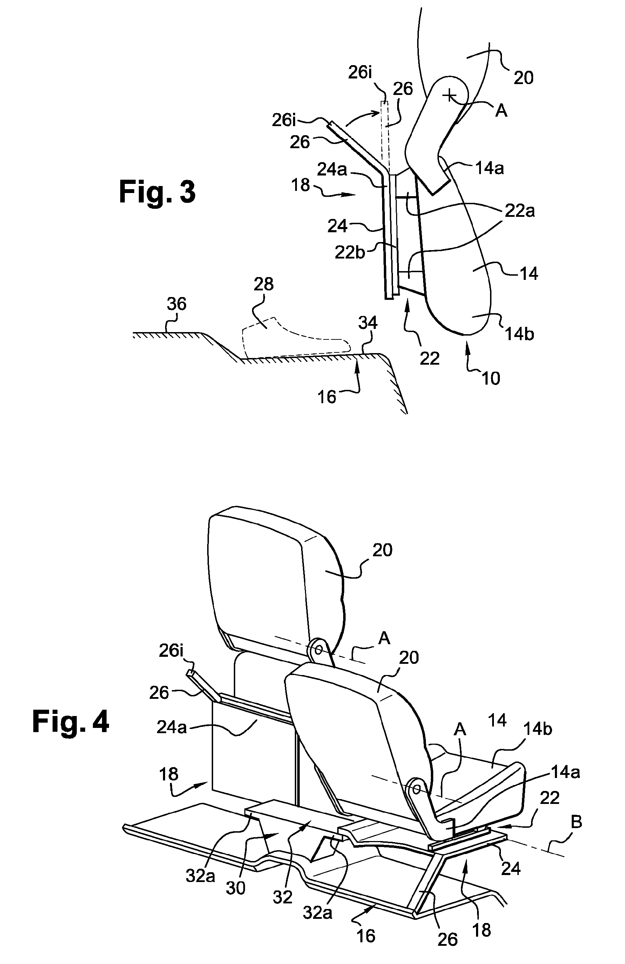

Pour permettre aux passagers d'accéder facilement à la rangée arrière de sièges, chaque siège 10 de la rangée centrale 12 est apte à être déplacé vers une position verticale représentée à la figure 3.

Pour cela, chaque siège 12 comporte des moyens d'articulation (non représentés) de l'assise 14 par rapport au plancher autour d'un deuxième axe transversal B situé au niveau de l'extrémité longitudinale avant 14b de l'assise 14, entre une position basse d'utilisation représentée à la figure 2, dans laquelle l'assise 14 est sensiblement horizontale et parallèle au plancher, et une position relevée de rangement représentée à la figure 3, dans laquelle l'assise 14 est en position sensiblement verticale.

De plus, les moyens pour l'articulation du dossier 20 par rapport à l'assise 14 sont reliés aux moyens d'articulation de l'assise par rapport au plancher 16 de manière que le dossier 20 s'étend verticalement en prolongeant l'assise 14 vers le haut lorsque l'assise 14 est en position relevée.

Les moyens 22 de réglage de la position longitudinale de l'assise 14 par rapport au plancher 16 comportent une glissière 22a qui est fixée à chaque bord latéral de l'assise 14 et qui est montée coulissante dans un rail longitudinal 22b associé. Les moyens 22 de réglage de la position longitudinale de l'assise 14 comportent aussi des moyens de verrouillage et de déverrouillage de chaque glissière 22a en position dans le rail longitudinal 22b associé, qui sont actionnés par l'intermédiaire d'une barre de commande 22c.

Conformément à l'invention, le siège 10 est monté sur le plancher 16 du véhicule par l'intermédiaire d'un podium 18 qui est situé au dessous de l'assise 14, et qui est réalisé de manière que l'assise 14 soit située verticalement à distance du plancher 16 du véhicule.

Conformément à un autre aspect de l'invention, le podium 18 porte aussi les moyens 22 de réglage de la position longitudinale de l'assise 14 par rapport au plancher 16, et il est solidaire de l'assise 14 en basculement par rapport au plancher 16.

Le podium 18 comporte un châssis 24 supérieur horizontal sur lequel l'assise 14 est montée et au moins un pied arrière 26 qui s'étend globalement vers le bas depuis l'extrémité longitudinale arrière 24a du châssis 24, de manière que l'extrémité inférieure libre 26i du pied 26 est en appui vers le bas contre le plancher 16.

L'assise 14 est montée sur le châssis 24 par l'intermédiaire des moyens 22 de réglage de la position longitudinale de l'assise 14 par rapport au plancher 16. Ainsi, chaque rail longitudinal 22b est fixé directement au châssis supérieur 24.

Comme on l'a dit plus haut, le podium 18 est solidaire de l'assise 14 en basculement par rapport au plancher 16 autour de l'axe transversal B. Ainsi, lorsque l'assise 14 est en position de rangement, le châssis supérieur 24 s'étend globalement verticalement.

Selon une variante de réalisation de l'invention, le pied arrière 26 est monté pivotant par rapport à l'extrémité arrière 24a du châssis 24 de manière que le pied 26 s'étende vers le bas depuis l'extrémité arrière 24a du châssis 24 lorsque l'assise 14 est en position basse d'utilisation, et de manière que le pied 26 s'étende globalement verticalement vers le haut en prolongeant le châssis 24, lorsque l'assise 14 est en position relevée de rangement, comme on peut le voir à la figure 3.

Ainsi, lorsque l'assise 14 est en position relevée, pour permettre aux passagers l'atteindre la rangée arrière de sièges, le pied 26 ne fait pas saillie par rapport à la face globalement verticale transversale arrière du châssis 24.

Les risques qu'un passager ne se blesse au contact de l'extrémité libre 26i du pied 26 sont par conséquent réduits fortement, tandis que la facilité d'accès à la rangée arrière de sièges est améliorée.

Comme on l'a dit plus haut, et selon l'invention, les moyens 22 de réglage sont portés par le châssis 24 du podium 18. Ainsi, le podium 18 n'est relié au plancher 16 que par l'intermédiaire du pied 26 qui est en appui sur le plancher 16.

Le siège 10 ne comporte aucun élément d'habillage ou de protection agencé autour du pied 26. Le volume disponible pour les pieds 28 du passager qui est assis à la rangée arrière de sièges, derrière le siège 10, est ainsi suffisamment important pour garantir à ce passager un certain confort.

Selon le mode de réalisation du siège 10 représenté aux figures 1 à 3, le podium 18 comporte deux pieds 26 agencés transversalement de part et d'autre de l'extrémité arrière 24a du châssis 24. Les efforts d'appui du podium 18 sur le plancher 16 sont ainsi correctement répartis transversalement, pour empêcher que le siège 1 ne bascule latéralement sous une charge trop importante.

Selon un autre mode de réalisation représentée à la figure 4, le podium 18 comporte un seul pied 26 qui est agencé au niveau de l'extrémité transversale externe associée de la rangée 12 de sièges 10. Cela permet d'accroître l'espace disponible au passager assis derrière le siège 10 pour qu'il dispose ses pieds 28 sans gêne sous le siège 10.

De plus, le plancher 16 porte un élément de support 30 qui est agencé transversalement entre les deux sièges 10 de la rangée 12, et sur lequel le châssis 24 de chaque siège 10 est apte à s'appuyer lorsque l'assise 14 du siège est en position basse d'utilisation.

Pour cela, l'élément de support 30 comporte une portion supérieure globalement horizontale 32, dont les extrémités transversales 32a sont situées au droit du coin interne arrière 24b de chaque châssis 24.

Comme on peut le voir notamment à la figure 2, le plancher 16 de l'habitacle comporte une partie horizontale avant 34 sur laquelle les sièges 10 de la rangée centrale sont montés, et une partie horizontale arrière 36 sur laquelle les sièges de la rangée arrière de sièges sont montés.

La partie arrière 36 du plancher est généralement plus haute que la partie avant 34 du plancher 16, notamment car le pont arrière (non représenté) du véhicule est monté sous cette partie arrière 36 du plancher 16.

Selon l'invention, et comme on l'a dit plus haut, chaque siège 10 de la rangée centrale 12 est monté sur le plancher 16 par l'intermédiaire du podium 18.

Selon une variante de réalisation de l'invention, chaque siège de la rangée arrière de sièges est identique aux sièges de la rangée centrale 12 et est monté sur la partie arrière 36 du plancher 16 par l'intermédiaire d'un deuxième podium similaire au podium 18 de montage des sièges 10 de la rangée centrale 12 sur le plancher.

Selon cette variante, les dimensions de ce deuxième podium sont inférieures aux dimensions du podium 18, notamment en ce qui concerne la différence de hauteur entre les deux parties 36, 38 du plancher 16.

Ainsi, l'habitacle du véhicule comporte des sièges identiques pour former la rangée centrale 12 et la rangée arrière, et le confort des passagers assis sur les sièges de la rangée arrière est identique au confort des passagers assis sur les sièges 10 de la rangée centrale.

## Revendications

1. Agencement pour habitacle de véhicule automobile qui comporte :
- au moins un siège (10) d'orientation générale longitudinale comportant une assise (14) horizontale et un dossier (20) qui est monté pivotant par rapport à l'extrémité arrière (14a) de l'assise (14) ;
- des moyens de montage, du siège (10) sur un plancher (16) du véhicule de manière que l'assise (14) soit située au dessus et à distance du plancher (16) ; et
- des moyens de réglage (22) de la position longitudinale de l'assise (14) dans l'habitacle,
du type dans lequel l'assise (14) est montée basculante par rapport au plancher (16) autour d'un axe transversal (B) entre une position d'utilisation dans laquelle l'assise (14) est sensiblement parallèle au plancher (16) du véhicule, et une position de rangement dans laquelle l'assise (14) est en position sensiblement verticale,
**caractérisé en ce que** le siège (10) est monté sur le plancher (16) du véhicule par l'intermédiaire d'un podium (18) qui porte les moyens de réglage (22) de la position longitudinale de l'assise (14) et qui est solidaire de l'assise (14) en basculement par rapport au plancher (16) autour de l'axe transversal (B) entre la position d'utilisation et la position de rangement.

2. Agencement selon la revendication précédente, **caractérisé en ce que** le podium (18) comporte un châssis (24) supérieur horizontal sur lequel sont montés les moyens de réglage (22), et au moins un pied (26) arrière qui s'étend globalement vers le bas depuis une extrémité arrière (24a) du châssis supérieur (24) et qui est monté articulé par rapport à l'extrémité arrière (24a) du châssis supérieur (24) de manière que le pied (26) s'étende vers le bas lorsque l'assise (14) est en position d'utilisation, et de manière que le pied (26) s'étende globalement verticalement vers le haut dans le prolongement du châssis supérieur (24) lorsque l'assise (14) est en position de rangement.

3. Agencement selon la revendication précédente, du type qui comporte une rangée transversale (12) de deux sièges (10) dont chacun est monté sur le plancher (16) par l'intermédiaire d'un podium (18) associé, **caractérisé en ce que** chaque podium (18) comporte un seul pied (26) qui est agencé sur le châssis supérieur (24) associé au voisinage de l'extrémité transversale externe de la rangée (12) de sièges (10), de manière à constituer une paire de pieds (26) pour la rangée (12) de sièges (10).

4. Agencement selon la revendication précédente, **caractérisé en ce qu'**il comporte un élément de support (30) agencé transversalement entre les deux sièges (10) qui comporte une portion supérieure (32) sur laquelle le châssis supérieur (24) de chaque podium (18) est apte à venir en butée vers le bas lorsque l'assise (14) du siège (10) associé est en position d'utilisation.
